# FASCICULE DE BREVET EUROPEEN

(11) **EP 2 202 287 B1**
(45) Date de publication et mention de la délivrance du brevet: **29.02.2012**
(21) Numéro de dépôt: 09290862.3
(22) Date de dépôt: 13.11.2009
(51) Int. Cl.: C11C 3/04, C10L 1/02, B01J 23/00, B01J 23/06, B01J 37/00, B01J 37/04

(54) **Procédé de préparation d'esters alcooliques à partir de triglycérides et d'alcools au moyen de catalyseurs hétérogènes associant au moins une solution solide de ZnxAl2O3+x et du ZnO**
Herstellungsverfahren von alkoholischen Estern aus Triglyzeriden und Alkoholen mit Hilfe von heterogenen Katalysatoren in Verbindung mit mindestens einer festen Lösung von ZnAl2O3+x und ZnO
Process for preparing alcohol esters from triglycerides and alcohol using heterogeneous catalysts associating at least one solid solution of ZnxAI2O3+x and ZnO

(30) Priorité: 23.12.2008 FR 0807413
(43) Date de publication de la demande: 30.06.2010
(73) Titulaire: IFP Energies nouvelles, 92852 Rueil-Malmaison Cedex (FR)
(72) Inventeur: Bazer-Bachi, Delphine, 69230 Saint Genis Laval (FR); Coupard, Vincent, 38540 Valencin (FR); Maury, Sylvie, 69390 Charly (FR); Rebours, Bernadette, 69007 Lyon (FR)

(56) Documents cités:
- EP-A1- 1 352 893
- EP-A1- 1 468 734
- FR-A1- 2 752 242
- US-A1- 2007 066 838
- JITPUTTI J ET AL: "Transesterification of crude palm kernel oil and crude coconut oil by different solid catalysts" CHEMICAL ENGINEERING JOURNAL, ELSEVIER SEQUOIA, LAUSANNE, CH, vol. 116, no. 1, 1 février 2006 (2006-02-01), pages 61-66, XP025176435 ISSN: 1385-8947 [extrait le 2006-02-01]
- YANG ET AL: "Soybean oil transesterification over zinc oxide modified with alkali earth metals" FUEL PROCESSING TECHNOLOGY,, vol. 88, no. 6, 7 mai 2007 (2007-05-07), pages 631-638, XP022043861 ISSN: 0378-3820

## Description

### Domaine de l'invention

La présente invention est relative à un nouveau procédé de préparation d'esters alcooliques d'acides monocarboxyliques à partir de corps gras d'origine végétale ou animale par catalyse hétérogène:

La réaction principalement visée est une transestérification réalisée selon le schéma I ci-dessous et éventuellement une réaction couplée estérification et transestérification, l'estérification étant réalisée selon le schéma Il ci-dessous.

Schéma I : 1 triglycéride + 3 alcools → 3 esters de corps gras + glycérine

Schéma II : Acide gras + alcool → esters d'acide gras + eau Acide gras + glycérine → glycéride + eau

### Art antérieur

Les esters de corps gras sont actuellement utilisés dans de nombreuses applications comme carburants diesel, fuels domestiques, solvants écologiques, composés de base pour la fabrication de sulfonates d'alcools gras, d'amides, de dimères d'esters, etc.

Dans le cas du carburant Diesel, qui constitue aujourd'hui une application majeure des esters de corps gras, un certain nombre de spécifications ont été établies dont la liste, les limites et les méthodes font partie de la norme EN 14214 (2003) applicable actuellement en Europe. L'ester doit contenir au moins 96,5 % en masse d'esters, au plus 0,8 % en masse de monoglycérides, au plus 0,2 % en masse de diglycérides et au plus 0,2 % en masse de triglycérides, peu d'acides gras libres (<0,5 mg de KOH par g), qui peuvent être corrosifs, moins de 0,25 % en masse de glycérine liée et libre et des métaux seulement à l'état de traces. Ceci implique un protocole précis pour obtenir la pureté désirée.

Lorsqu'on fabrique un ester à partir d'huile ou de graisse et de monoalcool, il se forme automatiquement, selon la nature de l'huile engagée au départ, de 10 à 15 % en masse d'un co-produit, qui est la glycérine. Cette glycérine peut être valorisée dans diverses applications, mais nécessite au préalable d'être purifiée (élimination des métaux, sels, eau). Afin d'atteindre cette pureté, une bi-distillation sous vide est souvent nécessaire.

En résumé, la, plupart dés procédés commerciaux de fabrication d'esters aboutissent assez facilement à des produits bruts (esters et glycérine), qu'il faut cependant purifier de façon approfondie par divers traitements qui grèvent finalement le prix de la transformation.

Il est connu de fabriquer des esters méthyliques par les voies classiques de la catalyse homogène avec des catalyseurs solubles, comme la soude ou le méthylate de sodium, en faisant réagir une huile neutre et un alcool comme le méthanol (par exemple JAOCS 61, 343-348 (1984)). On n'arrive cependant à un produit pur utilisable comme carburant et une glycérine aux normes qu'après de très nombreuses étapes. En effet, la glycérine obtenue est polluée par les sels alcalins ou les alcoolates, si bien que l'installation de purification de la glycérine est presque aussi coûteuse que celle qui permet la fabrication de l'ester.

Les procédés par catalyse hétérogène offrent l'avantage de produire des esters et de la glycérine exempts de catalyseur donc faciles à purifier. Toutefois, il est souvent difficile d'obtenir de façon économique à la fois un ester et une glycérine de grande pureté.

De nombreux oxydes de métaux ont pu être utilisés pour catalyser la réaction de transestérification. C'est le cas, récemment, d'oxyde de zinc dopé au lithium (Xie et al., Ind. Eng. Chem. Res., 2007, 10.1021/ie070597s) ou au barium (Xie et al., Catalysis Letters (2007) 117, 159-165). Reddy et al. (Energy Fuels, 2006, 20, 1310) proposent l'utilisation d'oxyde de calcium nanocristallin qui, grâce à la formation, en présence de méthanol, d'espèces Ca(OMe)₂ présente le comportement d'un catalyseur essentiellement hétérogène. De nombreux auteurs ont également étudié le comportement de l'oxyde de magnésium (Dossin et al., Applied Catalysis B, 2006, 61, 35-45). Ces oxydes de métaux alcalino-terreux présentent des solubilités non nulles dans le méthanol (Gryglewicz, Bioresour. Technol., 1999, 70, 249), ce qui pose des problèmes de lessivage et de stabilité des catalyseurs entraînant une forte baisse d'activité au recyclage. La solution proposée pour les catalyseurs à base d'oxyde de zinc consistant à régénérer le catalyseur par imprégnation de nitrate de lithium ou de baryum n'est pas transposable à une utilisation industrielle. De plus, avec ce type de catalyseurs, les espèces métalliques lessivées se retrouvent dans les produits obtenus (ester et glycérine), entraînant une dégradation de leur qualité et leur non-conformité aux spécifications imposées sur le biodiesel. Le brevet européen EP-B-0 198 243 décrit la fabrication d'esters méthyliques par transestérification d'une huile avec du méthanol, en utilisant comme catalyseur une alumine ou un mélange d'alumine et d'oxyde ferreux. Toutefois, la VVH (volume d'huile injecté/volume de catalyseur/heure) est faible, la quantité de glycérine recueillie est très inférieure à celle prévue théoriquement et la pureté des esters obtenus est assez faible (comprise entre 93,5 et 98%).

Des procédés utilisant un système catalytique à base d'oxydes métalliques seuls ou associés, déposés ou non sur une alumine ont été décrits. Le brevet FR-B-2 752 242 au nom de la Demanderesse, décrit l'utilisation de catalyseurs solides et non solubles formés à partir d'oxyde de zinc et d'alumine ou d'aluminate de zinc, dans lequel la teneur en oxyde de zinc libre est limitée à 2% en masse.

La demande de brevet EP 1 468 734 déposée au nom de la Demanderesse propose un procédé de préparation d'un catalyseur comprenant de l'aluminate de zinc, de l'oxyde de zinc et de l'alumine et ayant des propriétés mécaniques de résistance à l'écrasement améliorées grâce à une substitution d'une partie de l'oxyde de zinc par du nitrate ou du carbonate de zinc dans le procédé de préparation. La teneur en oxyde de zinc libre est limitée à 2% en masse. Aucun résultat de tests catalytiques n'est présenté dans ce document.

De manière surprenante, les inventeurs ont découvert que l'utilisation d'un catalyseur préparé selon un mode opératoire particulier et contenant de fait plus de 7% masse de ZnO libre n'était pas préjudiciable à la stabilité du catalyseur, ni au lessivage du zinc dans le milieu réactionnel. Bien au contraire, un avantage a été trouvé à utiliser ces catalyseurs contenant notamment plus de 2% masse de ZnO libre contrairement à l'enseignement de la demande EP-1 468 734 et possédant des propriétés mécaniques adaptées à une utilisation dans les réacteurs industriels.

### Description détaillée de l'invention

La présente invention décrit un procédé d'amélioration du brevet FR-B-2 752 242 pour la préparation d'une composition d'esters alcooliques d'acides monocarboxyliques linéaires de 6 à 26 atomes de carbone et de glycérine dans lequel on fait réagir un corps gras d'origine animale ou végétale, avec un monoalcool aliphatique renfermant de 1 à 18 atomes de carbone, en présence d'au moins un catalyseur hétérogène contenant du ZnO et au moins une solution solide de formule générale ZnₓAl₂O₍₃₊ₓ₎, le ZnO libre étant présent entre 7 et 30% masse et x compris dans l'intervalle ]0 ; 1[.

De façon préférée, la teneur en oxyde de zinc libre est entre 10 et 30% masse.

Le procédé de préparation du catalyseur utilisé dans la présente invention comprend au moins les étapes suivantes :
1) pré-mélange des poudres (oxyde de zinc et précurseur d'alumine ou bien oxyde de zinc, ZnₓAl₂O₍₃₊ₓ₎ et précurseur d'alumine) par mise en rotation des bras d'un malaxeur
2) malaxage des poudres en présence d'au moins un agent peptisant (acide minéral ou organique),
3) extrusion de la pâte obtenue après malaxage, à une pression comprise entre 3 et 10 MPa
4) traitement thermique comprenant au moins :
   d1) une étape de séchage des extrudés obtenus à l'étape c/
   d2) une calcination sous air
5) éventuellement un broyage en vue d'une mise en forme différente de l'extrudé obtenu à l'issue des précédentes étapes.

Un autre mode de préparation du catalyseur utilisé dans la présente invention comprend les étapes suivantes :
a) peptisation du précurseur d'alumine en présence d'au moins un agent peptisant de type acide minéral ou organique,
b) ajout d'au moins un oxyde de zinc, ou d'au moins un oxyde de zinc et d'un oxyde mixte ZnₓAl₂O₍₃₊ₓ₎ à la pâte obtenue à l'étape a/ et malaxage du mélange obtenu,
c) extrusion de la pâte obtenue après malaxage, à une pression comprise entre 3et10MPa
d) traitement thermique comprenant au moins :
   d1) une étape de séchage des extrudés obtenus à l'étape c/
   d2) une calcination sous air
e) éventuellement un broyage en vue d'une mise en forme différente de l'extrudé obtenu à l'issue des précédentes étapes.

Le catalyseur utilisé dans la présente invention peut être sous forme de poudre, d'extrudés, de billes ou de pastilles.

### Sources de ZnO, d'alumine et d'aluminate :

De nombreuses méthodes de préparation d'oxyde de zinc sont décrites dans la littérature : procédé indirect, encore appelé procédé français, le procédé direct , également appelé procédé américain, ou encore, par déshydratation d'hydroxyde de zinc obtenu par précipitation, par décomposition des différents précurseurs du zinc, qu'ils soient commerciaux ou obtenus par une précipitation préliminaire.

Les oxydes dé zinc commerciaux peuvent être mis en oeuvre dans la fabrication du solide selon l'invention. Les composés du zinc utilisés sont choisis parmi les oxydes de zinc commerciaux ou préparés toute autre voie de synthèse.

Le précurseur d'alumine utilisée répond à la formule générale Al₂O₃, nH₂O. On peut en particulier utiliser des hydrates d'alumine tels que l'hydrargilite, la gibbsite, la bayerite, la boehmite ou la pseudo boehmite et les gels d'alumine amorphe ou essentiellement amorphes. Un mélange de ces produits sous quelque combinaison que ce soit peut être également utilisé. On peut également mettre en oeuvre les formes déshydratées de ces composés qui sont constitués d'alumine de transition et qui comportent au moins une des phases prises dans le groupe : rhô, khi, êta, gamma, kappa, thêta et delta, qui se différencient essentiellement par l'organisation de leur structure cristalline.

Dans le cas où ZnₓAl₂O₍₃₊ₓ₎ est introduit directement lors de la mise en forme, celui-ci peut être préparé par les méthodes classiques connues de l'homme du métier : co-précipitation de précurseurs d'aluminium et de zinc, synthèse hydrothermale, voie sol-gel, imprégnation de précurseurs de zinc sur alumine...

Le rapport massique Al₂O₃/ZnO est de préférence compris entre 70/30 et 40/60.

De manière préférée, l'agent peptisant est choisi parmi l'acide chlorhydrique, l'acide sulfurique, l'acide nitrique, l'acide acétique et l'acide formique.

Le choix de l'agent peptisant (sa quantité, sa concentration, sa nature) et les conditions de malaxage telles que la vitesse d'agitation, la durée du malaxage et perte au feu utilisée sont des paramètres importants.

La concentration en agent peptisant est de préférence comprise entre 2 et 15% masse par rapport aux oxydes, de façon encore préférée entre 4 et 10% masse.

Le malaxage est réalisé dans un mélangeur, pendant une durée de 5 à 75 min.

La vitesse de rotation des bras du malaxeur est inférieure à 150 tours/minute.

De façon préférée, le malaxage est réalisé pendant une durée de 15 à 60 min, à une vitesse de rotation des bras du malaxeur comprise entre 15 et 75 tours/minute

L'extrusion peut être réalisée, par exemple dans une extrudeuse piston, mono-vis ou bis-vis en utilisant tout type de filière, par exemple cylindrique, trilobée, quadrilobés, cannelée ou tout autre forme géométrique.

Les extrudés obtenus sont soumis à un traitement thermique qui consiste en un séchage réalisé à une température comprise entre 40 et 150°C, puis en une calcination à une température comprise entre 300 et 1100°C.

Très préférentiellement, le séchage se fait entre 70 et 120°C et la calcination entre 350 et 800°C.

La phase catalytique active selon la présente invention ZnₓAl₂O₍₃₊ₓ₎ + 7 à 30% ZnO est obtenue en sélectionnant des conditions opératoires précises et plus particulièrement en choisissant le bon compromis entre les paramètres de malaxage et de température favorables à l'obtention de la phase active.

Un avantage du procédé selon l'invention mettant en oeuvre un catalyseur contenant une teneur en ZnO plus élevée que celle décrite dans l'art antérieur et au moins une solution solide de type ZnₓAl₂O₍₃₊ₓ₎ réside dans une activité catalytique améliorée, ce qui permet donc de travailler à plus basse température, de diminuer le temps de contact entre les réactifs et/ou de limiter le rapport alcool/corps gras par rapport à l'art antérieur, tout en maintenant une sélectivité élevée en esters.

Un autre avantage de l'invention réside dans le fait que ces solides catalysent des réactions de transestérification et d'estérification selon un processus de catalyse hétérogène. Ainsi, le catalyseur n'est pas consommé dans la réaction et ne se retrouve pas dissous dans le milieu réactionnel. En restant sous forme solide, il est facilement séparé du milieu réactionnel sans perte de catalyseur et sans pollution du milieu réactionnel par des espèces dissoutes ou des résidus de catalyseur.

L'activité et la sélectivité de ce catalyseur n'est pas affectée par la réaction de transestérification ou d'estérification : le catalyseur est stable et recyclable dans les conditions expérimentales de la réaction. Ce type de catalyseur est compatible avec une utilisation dans un procédé industriel en continu, par exemple, en lit fixe et dans lequel la charge de catalyseur peut être utilisée pendant une très longue durée sans perte d'activité.

Les propriétés mécaniques du catalyseur utilisé dans la présente invention sont déterminées par le test d'écrasement grain à grain décrit par la méthode ASTM D 4179-88a. Celle-ci consiste à mesurer la force de rupture de chaque particule d'un échantillon représentatif comprenant au moins 50 particules. Le résultat est pondéré par la longueur de l'extrudé.
La valeur d'EGG est la moyenne des forces de rupture mesurées et ramenées à l'unité de longueur de l'extrudé (exprimée en daN.mm⁻¹) pour l'ensemble des particules de l'échantillon.
Dans le cas du catalyseur utilisé selon l'invention, la valeur d'EGG est supérieure à 0,8 daN.mm⁻¹ (décaNewton par millimètre de longueur d'extrudé), de préférence supérieure à 1,0 daN.mm⁻¹. La résistance mécanique du catalyseur obtenu est donc largement acceptable pour une utilisation dans un procédé industriel en lit fixe.

### Corps gras

Les corps gras utilisés dans le procédé de l'invention correspondent à des substances naturelles ou élaborées, d'origine animale ou végétale, contenant majoritairement des triglycérides, couramment regroupés sous les termes d'huile et de graisses.

Parmi les huiles utilisables, on peut citer toutes les huiles courantes, comme les huiles de palme (concrètes ou oléines), de soja, de palmiste, de coprah, de babassu, de colza (ancien ou nouveau), de tournesol (classique ou oléique), de maïs, de coton, les huiles d'arachide, de pourghère (*Jatropha curcas*), de ricin, de lin et de crambe et toutes les huiles issues par exemple du tournesol ou du colza par modification génétique ou hybridation ou encore provenant d'algues.

On peut également utiliser des huiles de friture, d'équarrissage, des huiles animales variées, comme les huiles de poissons, de phoques, d'équarrissage, le suif, le saindoux, ou encore les graisses issues du traitement des eaux usées et même des graisses de volailles, car les esters fabriqués à partir de certains alcools comme l'alcool éthylique, isopropylique ou butylique, permettent de gagner plus de 10°C en point d'écoulement et par conséquent d'utiliser au départ des huiles plus saturées.

Parmi les huiles utilisées, on peut encore indiquer des huiles partiellement modifiées par exemple par polymérisation ou oligomérisation, comme par exemple, les "standolies" d'huile de lin, de tournesol et les huiles végétales soufflées.

Les huiles utilisées sont neutres ou acides, vierges ou recyclées.

La présence d'acide gras dans les huiles n'est pas a priori préjudiciable. Cependant, dans le cas d'huiles à très fort indice d'acide (proche de 10 mg de KOH/g), une des possibilités est de faire précéder la réaction de transestérification d'une réaction d'estérification des acides gras libres présents, soit en utilisant le même alcool que celui utilisé dans le procédé de transestérification en présence d'un acide fort comme l'acide sulfurique ou des acides suifoniques solubles ou supportés (de type résines Amberlyst 15®), soit en utilisant de préférence de la glycérine avec le même système catalytique que celui mis en jeu pour la réaction de transestérification, pour former un ester de glycérol total ou partiel, à pression atmosphérique et de préférence sous vide et à des températures comprises entre 150 et 220°C.

Lorsqu'on utilise des huiles de friture, qui constituent une matière première très bon marché pour produire un biodiesel, il est nécessaire d'éliminer du mélange réactionnel les polymères d'acides gras afin que le mélange d'esters réponde aux spécifications de la norme EN 14214.

### Alcool

La nature de l'alcool mis en jeu dans le procédé joue un rôle dans l'activité de transestérification.

D'une manière générale, il est possible d'utiliser divers monoalcools aliphatiques renfermant, par exemple, de 1 à 18 atomes de carbone, de préférence, de 1 à 12 atomes de carbone.

De façon encore plus préférée, le monoalcool aliphatique renferme de 1 à 5 atomes de carbone.

Le plus actif est l'alcool méthylique. Toutefois, l'alcool éthylique et les alcools isopropylique, propylique, butylique, isobutylique et même amylique, peuvent être envisagés. Des alcools plus lourds tels que l'alcool éthyl-hexylique ou l'alcool laurique peuvent également être utilisés.

On peut avantageusement ajouter aux alcools lourds de l'alcool méthylique qui facilite la réaction.

Par ailleurs, lorsqu'on prépare l'ester éthylique, on peut utiliser un mélange d'alcool éthylique et méthylique comprenant de 1 à 50% en poids, de préférence de 1 à 10% en poids, d'alcool méthylique de manière à augmenter la conversion.

### Conditions opératoires de la réaction de transestérification

Le procédé est opéré à des températures comprises entre 130°C et 220°C, à des pressions inférieures à 10 MPa avec un excès de monoalcool par rapport à la stoechiométrie corps gras/alcool.

Généralement la réaction peut être opérée selon différents modes de réalisation.

La réaction peut être mise en oeuvre en discontinu. Dans ce cas, on peut travailler en une ou deux étapes, c'est-à-dire réaliser une première réaction jusqu'à 85 % à 95 % de conversion en esters, refroidir en évaporant l'excès d'alcool, décanter la glycérine et finir la réaction en réchauffant à nouveau entre 130°C et 220°C et en ajoutant de l'alcool pour obtenir une conversion totale.

On peut aussi viser une conversion de 98 % en esters en travaillant suffisamment longtemps en une seule étape dans des conditions appropriées, par exemple en augmentant la température et/ou le rapport alcool/corps gras.

La réaction peut être mise en oeuvre en continu, en lit fixe ou avec des autoclaves et décanteurs en série. Dans un premier réacteur, on réalise une conversion partielle le plus souvent inférieure à 90% et généralement d'environ 85 %, puis on décante en évaporant l'alcool et en refroidissant ; dans un deuxième réacteur, on achève la réaction de transestérification dans les conditions citées en ajoutant une partie de l'alcool que l'on a évaporé précédemment. On évapore finalement dans un évaporateur l'excès d'alcool et l'on sépare la glycérine et les esters par décantation.

Ainsi, à l'issue de ces deux étapes, on obtient un biodiesel répondant aux spécifications. Le niveau de conversion est ajusté pour obtenir un ester carburant répondant aux spécifications et une glycérine de pureté élevée, en opérant en une ou deux étapes.

Si l'on choisit un procédé continu en lit fixe, on peut avec avantage travailler à des températures de 130 à 220°C, de préférence 150 à 180°C, à des pressions de 1 à 7 MPa, la VVH étant de préférence comprise entre 0,1 et 3, de préférence de 0,3 à 2, dans la première étape et le rapport poids alcool/huile variant de 3/1 à 0,1/1.

La tenue au lessivage est vérifiée dans la présente invention par une teneur en traces métalliques dissoutes provenant du catalyseur aussi bien dans l'ester formé que dans la glycérine produits, inférieures à 1 ppm, ainsi que par la stabilité de l'activité du catalyseur au cours du temps.

La stabilité du catalyseur est évaluée expérimentalement dans le temps par le suivi de son activité (conversion des triglycérides et/ou rendement en ester méthylique de colza).

Si l'on ne dépasse pas 220°C, on obtient généralement un ester de même couleur que l'huile de départ et une glycérine incolore après décantation.

L'analyse des effluents se fait, soit par chromatographie en phase gazeuse pour les esters et la glycérine, soit, plus rapidement, par chromatographie liquide par exclusion stérique pour les esters.

L'ester et le glycérol obtenus ne contiennent pas d'impuretés issues du catalyseur. De ce fait, aucun traitement de purification ne sera appliqué pour éliminer le catalyseur ou les résidus de celui-ci contrairement aux catalyseurs fonctionnant suivant un processus homogène pour lequel le catalyseur ou ses résidus sont, après réaction, localisés dans la même phase que l'ester et/ou la glycérine.

L'ester carburant obtenu présente une teneur en monoglycérides d'au plus 0,8% en masse, en diglycérides d'au plus 0,2% en masse, en triglycérides d'au plus 0,2% en masse, en glycérine de moins de 0,25% en masse.

Par ce type de procédé, l'épuration finale est réduite au minimum, tout en permettant d'obtenir un ester aux spécifications carburant et une glycérine de pureté comprise entre 95 et 99.9% et de préférence entre 98 et 99,9%.

### EXEMPLES

Les exemples suivants illustrent l'invention sans en limiter la portée, les Exemples 1 et 4 étant donnés à titre de comparaison.

Les exemples 2 et 3 illustrent, de manière non exhaustive, la préparation du catalyseur utilisé dans le cadre de l'invention.

Les exemples 5 et 6 donnés ci-dessus illustrent des tests qui ont été mis en oeuvre dans un réacteur batch et correspondent par conséquent à une seule étape. Pour obtenir un biodiesel répondant aux spécifications, il serait nécessaire de procéder à l'issue de cette première étape à une décantation en évaporant l'alcool et en refroidissant, puis d'achever la réaction de transestérification en ajoutant la partie de l'alcool évaporé.

Les exemples 7 à 9 ont été réalisés dans un réacteur lit fixe traversé et ont permis de mettre en évidence l'activité du catalyseur en conditions proches du fonctionnement industriel. Ils ont aussi permis de valider la stabilité des catalyseurs au cours du temps et l'absence de lessivage dans les effluents des métaux présents initialement sur le catalyseur .

L'huile utilisée dans ces exemples est de l'huile de colza dont la composition en acides gras est la suivante :

**Tableau 1 : Composition de l'huile de colza.**

| Glycéride d'acides gras | Nature de la chaîne grasse | % en masse |
|---|---|---|
| Palmitique | C16 :0 | 5 |
| Palmitoléique | C16 :1 | < 0,5 |
| Stéarique | C18 :0 | 2 |
| Oléique | C18 :1 | 59 |
| Linoléique | C18:2 | 21 |
| Linolénique | C18 :3 | 9 |
| Arachidique | C20 :0 | < 0,5 |
| Gadoléique | C20 :1 | 1 |
| Béhénique | C22 :0 | < 0,5 |
| Erucique | C22 :1 | < 1 |

Cependant, toute autre huile d'origine végétale ou animale pourrait donner des résultats analogues.

La composition des solutions solides ZnₓAl₂O₍₃₊ₓ₎ peut être déduite de l'estimation de leur paramètre de maille, en utilisant la relation linéaire paramètre-composition dans le domaine d'existence des solutions solides ZnO-Al₂O₃.
Dans le cas de mélange de phases au sein du catalyseur, les proportions massiques, les compositions des solutions solides et la teneur massique en ZnO ont été obtenues par affinement des diagrammes de diffraction des Rayons X par la méthode de Rietveld. Cette méthode consiste à minimiser les différences d'intensités intégrées entre un diagramme expérimental et le diagramme calculé à partir de modèles des phases présentes, par affinement des profils de raies et des paramètres structuraux, en particulier le taux d'occupation des sites tétraédriques et octaédriques de la structure de type spinelle lacunaire. Deux types de contraintes ont été imposées afin d'obtenir des solutions raisonnables : respect de la composition élémentaire du mélange et électroneutralité de chacune des solutions solides ZnₓAl₂O₍₃₊ₓ₎.
Dans les exemples qui suivent, les résultats d'analyse élémentaire sont exprimés en % massiques.

### Exemple 1 (non conforme à l'invention) : Préparation d'un solide de référence C1 par malaxage

Un catalyseur est préparé par malaxage d'un gel d'alumine de type .PURAL® SB3 commercialisé par la société SASOL et d'oxyde de zinc (source BAYER), en présence de 20% masse d'agent peptisant (acide nitrique). Le catalyseur est extrudé avec une filière de 3mm de diamètre et soumis à un traitement thermique à 650°C pendant 2h.
La surface du solide est de 154 m².g⁻¹. La diffraction des rayons X permet d'identifier une phase majoritaire de type spinelle dont la stoechiométrie moyenne est de Zn_{0.42}Al₂O_{3.42} et du ZnO libre à hauteur de 5.5%.
L'analyse élémentaire fournit la teneur des différents éléments : 24% Zn et 37% Al.

### Exemple 2: Préparation d'un catalyseur C2 selon la présente invention

Le solide est préparé par malaxage d'un gel d'alumine de type PURAL® SB3 commercialisé par la société SASOL et d'oxyde de zinc (source BAYER) en présence de 6.2% d'acide nitrique eh solution dans de l'eau, de façon à obtenir une composition du matériau dont l'analyse élémentaire est 25% Zn et 37% Ai.

Le catalyseur est extrudé avec une filière de 3 mm de diamètre et soumis à un traitement thermique à 650°C pendant 2h.

La surface du solide est de 180 m².g⁻¹. La diffraction des rayons X permet une détermination quantitative des différentes phases. On détecte 10% d'oxyde de zinc et deux solutions solides : une riche en zinc et une seconde riche en aluminium. L'analyse par affinement de structure permet d'aboutir à la composition de chacune de ces phases : ZnO (10%), Zn_{0,6}Al₂O_{3,6} (69%, paramètre de maille 8,08Å) et Zn_{0,05}Al₂O_{3,05} (21 %, paramètre de maille 7,92Å).

### Exemple 3 : Préparation d'un catalyseur C3 selon la présente invention

Le solide est préparé par malaxage d'un gel d'alumine et d'oxyde de zinc (mêmes provenances que dans les exemples précédents) en présence de 5.8% d'acide nitrique en solution dans de l'eau, de façon à obtenir une composition du matériau dont l'analyse élémentaire est 39% Zn et 27% Al.

Le catalyseur est extrudé avec une filière de 3 mm de diamètre et soumis à un traitement thermique à 650°C pendant 2h.

La surface du solide est de 149 m².g⁻¹.

La diffraction des rayons X permet une détermination quantitative des différentes phases. On détecte 27% d'oxyde de zinc ZnO et deux solutions solides : une riche en zinc et une seconde riche en aluminium.
L'analyse par affinement de structure permet d'aboutir à la composition de chacune de ces phases : ZnO (27%), Zn_{0,7}Al₂O_{3,7} (51%, paramètre de maille 8,08Å) et Zn_{0,33}Al₂O_{3,33} (22%, paramètre de maille 8,01Å).

### Exemple 4 (comparatif): Préparation d'un catalyseur C4 à base d'oxyde de magnésium

Le solide est préparé par malaxage d'un gel d'alumine de type PURAL® SB3 commercialisé par la société SASOL et d'oxyde de magnésium en présence de 6% d'acide nitrique en solution dans de l'eau, de façon à obtenir une composition du matériau dont l'analyse élémentaire est 17% Mg et 36% Al.
Le catalyseur est extrudé avec une filière de 3 mm de diamètre et est soumis à un traitement thermique à 650°C pendant 2h.

La surface du solide est de 218 m².g⁻¹.

La diffraction des rayons X permet une détermination semi quantitative des différentes phases. On détecte environ 16% d'oxyde de magnésium MgO et au moins une solution solide Mg-Al dont la composition est proche de Mg_{0.9}Al₂O_{3.9}.

### Tests catalytiques

### Exemple 5 : Transestérification d'huile de colza par le méthanol en présence d'un catalyseur C1 selon l'art antérieurs

On introduit dans un réacteur fermé à température ambiante 25 g d'huile de colza, 25 g de méthanol et 1 g de catalyseur préparé tel que décrit par l'Exemple 1 sous forme d'extrudés. Le ratio massique méthanol/ huile est donc de 1, ce qui correspond à un ratio molaire de 27,5. Le réacteur est ensuite fermé, agité (200 trs/min) et chauffé à 205°C à l'aide d'un agitateur magnétique chauffant. La température du milieu réactionnel est stabilisée à 205°C après 30 minutes de chauffe. La pression est la pression autogène de l'alcool à la température de travail, soit 4 MPa. Le suivi de la réaction débute lorsque la température du milieu réactionnel a atteint la consigne. Des prélèvements sont effectués de manière régulière afin de suivre l'avancement de la réaction. Les prélèvements effectués ainsi que l'effluent final sont lavés par une solution aqueuse saturée en NaCl, puis après décantation, la phase organique supérieure est analysée par chromatographie par perméation de gel (GPC). Le tableau suivant résume les résultats obtenus.

| | | |
|---|---|---|
| **% massique dans la phase organique^{a} après 2h** | Triglycérides | 49.1 |
| | Diglycérides^{b} | 20.0 |
| | Monoglycéride | 5.3 |
| | Esters méthyliques d'huile végétale | 25.6 |

| | | |
|---|---|---|
| ^{a} déterminé par GPC ^{b} % représentant les diglycérides et stérols t=0 lorsque le milieu réactionnel est à température | | |

Le lessivage du catalyseur dans la phase ester est négligeable (la teneur en zinc et en aluminium, estimée par la technique plasma à couplage inductif (IPC) est inférieure à 1 ppm).

### Exemple 6 : Comparaison de l'activité des catalyseurs C1, C2 et C3 dans la réaction de transestérification d'huile de colza par le méthanol à 205°C

On répète l'exemple 5 en utilisant 25 g d'huile de colza, 25 g de méthanol et 1 g de catalyseur sous forme d'extrudés. La réaction est conduite à 205°C, la température du milieu réactionnel étant stabilisée après 30 minutes de chauffe. Le tableau suivant résume les résultats obtenus. Seules les teneurs en produits et réactifs après 2 heures de réaction sont donnés, mais le classement des catalyseurs reste le même après 4 heures et 6 heures de réaction.

| | | **catalyseur (extrudés)** | | |
|---|---|---|---|---|
| | | **C1** | **C3** | **C2** |
| **% massique dans la phase organique^{a} après 2h** | Triglycérides | 49.1 | 30,1 | 39.8 |
| | Diglycérides^{b} | 20.0 | 20,4 | 19.0 |
| | Monoglycéride | 5.3 | 9,5 | 6,1 |
| | Esters méthyliques | 25.6 | 40,0 | 35.1 |

| | | | | |
|---|---|---|---|---|
| ^{a} déterminé par GPC ^{b} % représentant les diglycérides et stérols t=0 lorsque le milieu réactionnel est à température | | | | |

La conversion (estimée par rapport aux triglycérides) est de 69,9% après 120 min de réaction avec le catalyseur selon l'invention C3 et de 60.2% avec C2. Cette conversion est supérieure à celle atteinte avec le catalyseur C1 non conforme à l'invention. Le rendement en esters méthyliques de colza est aussi beaucoup plus élevé avec les catalyseurs selon la présente invention C3 et C2, soit 15 points supérieurs avec C3 qu'avec C1.

### Tests sur unité en lit catalytique traversé

### Exemple 7 : Stabilité et de activité des catalyseurs C2 et C3 dans la réaction de transestérification d'huile de colza par le méthanol à différentes températures

7cm de billes de verre sont introduites dans un réacteur tubulaire de 44cc, puis 12g de catalyseur C2 ou C3 sous forme d'extrudés puis 7cm de billes de verre, l'ensemble est chauffé au moyen d'un bain d'huile. Une étape de séchage du catalyseur est réalisé sous flux de méthanol à température ambiante, lorsque la teneur en eau du méthanol sortant est égale à la teneur en eau du méthanol entrant, l'huile de colza est injectée à une pph de 2,7h⁻¹ (g d'huile par gramme de catalyseur par heure), un ratio massique de 1 entre l'huile et le méthanol étant utilisé. Quatre températures différentes ont été testées, le dernier point à 160°C est un point retour permettant de vérifier la stabilité du catalyseur en test. La durée totale d'un essai est de 300h. Les prélèvements sont effectués lorsque l'unité est en régime stabilisé.

| | % massique^{a} | Triglycérides | Diglycérides^{b} | Monoglycérides | esters méthyliques |
|---|---|---|---|---|---|
| C2 | 160°C | 63,1 | 10,1 | 2,4 | 23,0 |
| | 180°C | 46,2 | 10,4 | 3,5 | 38,0 |
| | 200°C | 37,2 | 8,5 | 3,3 | 48,0 |
| | 220°C | 32,0 | 7,0 | 3,2 | 55.0 |
| | 160°C (point retour | 73,0 | 7,3 | 1,7 | 17,0 |
| C3 | 160°C | 59,7 | 12,5 | 3,1 | 23,2 |
| | 180°C | 39,0 | 11,7 | 4,2 | 43,0 |
| | 200°C | 25,0 | 8,7 | 4,2 | 59,0 |
| | 220°C | 15,6 | 6,1 | 4,0 | 71,0 |
| | 160°C (point retour) | 59,0 | 10,0 | 3,0 | 25,0 |

| | | | | | |
|---|---|---|---|---|---|
| ^{a} déterminé par analyse GPC ^{b} % représentant les diglycérides et stérols | | | | | |

Les deux catalyseurs réalisés selon l'invention présentent une activité stable au cours du temps. Il est à noter que le catalyseur C4 est plus actif que C3. La teneur en élément Zn dosée dans l'ester étant dans les deux cas inférieure à la limite de détection des analyseurs utilisés.

### Exemple 8 : Influence de la nature de l'alcool : Comparaison de l'activité des catalyseurs C2 et C3 dans la transestérification d'huile de colza par l'éthanol.

On introduit 7cm de billes de verre, puis 20g de catalyseur C2 ou C3 sous forme d'extrudés puis 7cm de billes de verre dans un réacteur de 44cc chauffé au moyen d'un bain d'huile. Une étape de séchage du catalyseur est réalisé sous flux d'éthanol à température ambiante, lorsque la teneur en eau de l'éthanol sortant est égale à la teneur en eau de l'éthanol entrant, l'huile de colza est injectée à une pph de 0.67h⁻¹ (g d'huile par gramme de catalyseur par heure), un ratio massique de 1 entre l'huile et l'éthanol étant utilisé. Trois températures différentes ont été testées, le dernier point à 160°C est un point retour permettant de vérifier la stabilité du catalyseur en test. La durée totale d'un essai est de 560h. Les prélèvements sont effectués lorsque l'unité est en régime stabilisé. Les résultats obtenus avec les deux catalyseurs C2 et C3 selon l'invention sont présentés dans le tableau ci-dessous.

| | % massique^{a} | Triglycérides | Diglycérides^{b} | Monoglycérides | esters éthyliques |
|---|---|---|---|---|---|
| C2 | 200°C | 24,5 | 8,5 | 8,0 | 59,0 |
| | 220° C | 9,8 | 4,8 | 7,7 | 77,5 |
| | 180°C | 48,8 | 13,3 | 6,3 | 31,2 |
| | 200°C (point retour) | 27,1 | 9,6 | 7,9 | 55,0 |
| C3 | 200°C | 20,0 | 7,6 | 7,7 | 64,5 |
| | 220°C | 7,5 | 3,9 | 7,4 | 81,2 |
| | 180°C | 40,0 | 12,6 | 7,1 | 40,2 |
| | 200°C (point retour) | 19,4 | 7,7 | 8,0 | 64,9 |

| | | | | | |
|---|---|---|---|---|---|
| ^{a} déterminé par GPC ^{b} % représentant les diglycérides et stérols | | | | | |

Les deux catalyseurs réalisés selon l'invention présentent une activité stable au cours du temps dans la réaction d'éthanolyse. Il est à noter que le catalyseur C3 est plus actif que C2. La teneur en élément Zn dosée dans l'ester étant dans les deux cas inférieure à la limite de détection de l'analyseur utilisé.

### Exemple 9 : Influence de la nature de l'oxyde : Comparaison de l'activité et de la stabilité des catalyseurs C2 et C4 dans la transestérification d'huile de colza par le méthanol à différentes températures.

7cm de billes de verre sont introduites dans un réacteur tubulaire de 44cc, puis 12g de catalyseur C2 ou C4 sous forme d'extrudés puis 7cm de billes de verre, l'ensemble est chauffé au moyen d'un bain d'huile. Une étape de séchage des catalyseurs est réalisée sous flux de méthanol à température ambiante, lorsque la teneur en eau du méthanol sortant est égale à la teneur en eau du méthanol entrant, l'huile de colza est injectée à une pph de 2.7h⁻¹ (g d'huile par gramme de catalyseur par heure), un ratio massique de 1 entre l'huile et le méthanol étant utilisé. Quatre températures différentes ont été testées, le dernier point à 160°C est un point retour permettant de vérifier la stabilité du catalyseur en test. La durée totale d'un essai est de 300h. Les prélèvements sont effectués lorsque l'unité est en régime stabilisé.

| | % massique^{a} | Triglycérides | Diglycérides^{b} | Monoglycérides | esters méthyliques |
|---|---|---|---|---|---|
| C2 | 160 °C | 63,1 | 10,1 | 2,4 | 23,0 |
| | 180°C | 46,2 | 10,4 | 3,5 | 38,0 |
| | 200°C | 37,2 | 8,5 | 3,3 | 48,0 |
| | 220°C | 32,0 | 7,0 | 3,2 | 55,0 |
| | 160°C (point retour) | 73,0 | 7,3 | 1,7 | 17,0 |
| C4 | 160 °C | 68,3 | 10,2 | 2,4 | 17,9 |
| | 180°C | 58,7 | 11,0 | 3,0 | 25,7 |
| | 200°C | 50,5 | 11,0 | 2,9 | 34,0 |
| | 220°C | 41,0 | 10,2 | 3,4 | 42,5 |
| | 160°C (point retour) | 82,7 | 6,9 | 1,1 | 8,3 |

| | | | | | |
|---|---|---|---|---|---|
| ^{a} déterminé par GPC ^{b} % représentant les diglycérides et stérols | | | | | |

Ce résultat montre clairement que le catalyseur C4 préparé à partir d'oxyde de magnésium selon le même protocole que le catalyseur C2 selon la présente invention est beaucoup moins stable et moins actif que le catalyseur C2. De plus, l'analyse ICP des effluents glycérine et ester pour les deux essais montre que dans le cas du test avec le catalyseur C2 (catalyseur selon l'invention), aucune trace de zinc n'est retrouvée dans l'ester ni dans la glycérine(<0.3ppm), alors que pour l'essai avec le catalyseur C4, des teneurs comprises entre 0,5 et 1,1 ppm de Mg sont retrouvées dans la glycérine, aucune trace n'étant retrouvée dans l'ester.

Les catalyseurs à base de MgO sont donc moins stables que les catalyseurs préparés à partir de ZnO, à teneur égale en oxyde de départ.

## Revendications

1. Procédé de fabrication d'une composition d'esters alcooliques d'acides monocarboxyliques linéaires de 6 à 26 atomes de carbone et de glycérine, dans lequel on fait réagir un corps gras d'origine végétale ou animale avec un monoalcool aliphatique renfermant de 1 à 18 atomes de carbone, en présence d'au moins un catalyseur hétérogène associant au moins une solution solide de type ZnₓAl₂O₍₃₊ₓ₎ dans laquelle x est compris entre 0 et 1 (bornes exclues) et du ZnO présent entre 7 et 30% en masse

2. Procédé selon la revendication 1 dans lequel le catalyseur associant au moins une solution solide de type ZnₓAl₂O₍₃₊ₓ₎ dans laquelle x est compris entre 0 et 1 (bornes exclues) et du ZnO présent entre 10 et 30% en masse

3. Procédé selon l'une des revendications 1 et 2 dans lequel le catalyseur hétérogène est préparé selon un procédé comprenant au moins les étapes suivantes :
a) pré-mélange des poudres d'oxyde de zinc et du précurseur d'alumine ou bien d'oxyde de zinc d'aluminate de zinc ZnₓAl₂O₍₃₊ₓ₎ et de précurseur d'alumine par mise en rotation des bras d'un malaxeur
b) malaxage des poudres en présence d'au moins un agent peptisant de type acide minéral ou organique,
c) extrusion de la pâte obtenue après malaxage, à une pression comprise entre 3 et 10 MPa
d) traitement thermique comprenant au moins les étapes :
d1) une étape de séchage des extrudés obtenus à l'étape c/
d2) une calcination sous air
e) éventuellement un broyage en vue d'une mise en forme différente de l'extrudé obtenu à l'issue des précédentes étapes.

4. Procédé selon l'une des revendications 1 ou 2 dans lequel le catalyseur hétérogène est préparé selon un procédé comprenant au moins les étapes suivantes :
a) peptisation du précurseur d'alumine en présence d'au moins un agent peptisant de type acide minéral ou organique,
b) ajout d'au moins un oxyde de zinc, ou d'au moins un oxyde de zinc et d'un oxyde mixte ZnₓAl₂O₍₃₊ₓ₎ à la pâte obtenue à l'étape a) et malaxage du mélange obtenu,
c) extrusion de la pâte obtenue après malaxage, à une pression comprise entre 3 et 10MPa
d) traitement thermique comprenant au moins les étapes :
d1) une étape de séchage des extrudés obtenus à l'étape c/
d2) une calcination sous air
e) éventuellement un broyage en vue d'une mise en forme différente de l'extrudé obtenu à l'issue des précédentes étapes

5. Procédé selon l'une des revendications 1 à 4 dans lequel l'agent peptisant est choisi parmi l'acide chlorhydrique, l'acide sulfurique, l'acide nitrique, l'acide acétique et l'acide formique.

6. Procédé selon l'une des revendications 1 à 5 dans lequel la concentration en agent peptisant est comprise entre 2 et 15% poids.

7. Procédé selon l'une des revendications 1 à 6 dans lequel le malaxage est réalisé pendant une durée de 15 à 60 min, à une vitesse de rotation des bras du malaxeur comprise entre 15 et 75 tours/minute.

8. Procédé selon l'une des revendications 1 à 7 dans lequel le traitement thermique auquel le catalyseur est soumis comprend un séchage entre 40 et 150°C puis une calcination entre 300 et 1100°C

9. Procédé selon l'une des revendications 1 à 8 dans lequel le catalyseur est sous forme de poudre, d'extrudés, de billes ou de pastilles.

10. Procédé selon l'une des revendications 1 à 9 dans lequel ledit monoalcool aliphatique renferme de 1 à 12 atomes de carbone, de préférence de 1 à 5 atomes de carbone.

11. Procédé selon l'une des revendications 1 à 10 dans lequel on opère à une température comprise entre 130° et 220°C, à une pression inférieure à 10 MPa et avec un excès de monoalcool par rapport à la stoechiométrie corps gras/alcool.

12. Procédé selon l'une des revendications 1 à 11 dans lequel l'huile de départ est choisie parmi les huiles de palme (concrètes ou oléines), de soja, de palmiste, de coprah, de babassu, de colza ancien ou nouveau, de tournesol classique ou oléique, de maïs, de coton, les huiles d'arachide, de pourghère, de ricin, de lin et de crambe, d'algues et les huiles du tournesol ou du colza obtenus par modification génétique ou par hybridation, les huiles partiellement modifiées par polymérisation ou oligomérisation, les huiles de friture, d'équarrissage, les huiles de poissons, de phoques, les graisses de volailles, le suif, le saindoux, les graisses issues du traitement des eaux usées.

13. Procédé selon l'une des revendications 1 à 12 dans lequel la réaction est mise en oeuvre en discontinu.

14. Procédé selon l'une des revendications 1 à 12 dans lequel la réaction est mise en oeuvre en continu, en lit fixe ou avec des autoclaves et décanteurs en série.

15. Procédé selon la revendication 14 dans lequel la réaction est mise en oeuvre en lit fixe, à une pression comprise entre 1 et 7 MPa et à une VVH comprise entre 0,1 et 3, avec un rapport poids alcool/corps gras compris entre 3/1 et 0,1/1.

## Claims

1. A method of preparing a composition of alcohol esters of linear monocarboxylic acids with 6 to 26 carbon atoms and glycerin, wherein a fatty substance of vegetable or animal origin is reacted with an aliphatic monoalcohol having 1 to 18 carbon atoms, in the presence of at least one heterogeneous catalyst combining at least a solid solution of ZnₓAl₂O₍₃₊ₓ₎ type, wherein x ranges between 0 and 1 (end points excluded), and ZnO present between 7 and 30 mass %.

2. A method as claimed in claim 1, wherein the catalyst combines at least a solid solution of ZnₓAl₂O₍₃₊ₓ₎ type, wherein x ranges between 0 and 1 (end points excluded), and ZnO present between 10 and 30 mass %.

3. A method as claimed in any one of claims 1 and 2, wherein the heterogeneous catalyst is prepared according to a process comprising at least the following stages:
a) premixing the powders of zinc oxide and alumina precursor or zinc oxide, zinc aluminate ZnₓAl₂O₍₃₊ₓ₎ and alumina precursor, by rotating the arms of a mixer,
b) mixing the powders in the presence of at least one peptization agent of mineral or organic acid type,
c) extruding the paste obtained after mixing, at a pressure ranging between 3 and 1 MPa,
d) thermal treatment comprising at least the following stages:
d1) a stage of drying the extrudates obtained in stage c)
d2) calcination in air
e) optionally crushing for a different shaping of the extrudate obtained at the end of the previous stages.

4. A method as claimed in any one of claims 1 or 2, wherein the heterogeneous catalyst is prepared according to a process comprising at least the following stages:
a) peptizing the alumina precursor in the presence of at least one peptization agent of mineral or organic acid type,
b) adding at least one zinc oxide, or at least one zinc oxide and a mixed ZnₓAl₂O₍₃₊ₓ₎ oxide to the paste obtained in stage a) and mixing the mixture obtained,
c) extruding the paste obtained after mixing, at a pressure ranging between 3 and 10 MPa,
d) thermal treatment comprising at least:
d1) a stage of drying the extrudates obtained in stage c)
d2) calcination in air
e) optionally crushing for a different shaping of the extrudate obtained at the end of the previous stages.

5. A method as claimed in any one of claims 1 to 4, wherein the peptization agent is selected from among hydrochloric acid, sulfuric acid, nitric acid, acetic acid and formic acid.

6. A method as claimed in any one of claims 1 to 5, wherein the peptization agent concentration ranges between 2 and 15 wt. %.

7. A method as claimed in any one of claims 1 to 6, wherein mixing is carried out for a duration ranging between 1 5 and 60 min, at a mixer arm rotating speed ranging between 1 5 and 75 rpm.

8. A method as claimed in any one of claims 1 to 7, wherein the thermal treatment to which the catalyst is subjected comprises drying between 40°C and 150°C, then calcination between 300°C and 1100°C.

9. A method as claimed in any one of claims 1 to 8, wherein the catalyst comes in form of powder, extrudates, balls or pellets.

10. A method as claimed in any one of claims 1 to 9, wherein said aliphatic monoalcohol comprises 1 to 12 carbon atoms, preferably 1 to 5 carbon atoms.

11. A method as claimed in any one of claims 1 to 10, wherein the method is carried out at a temperature ranging between 130°C and 220°C, at a pressure below 10 MPa and with excess monoalcohol in relation to the fatty substance/alcohol stoichiometry.

12. A method as claimed in any one of claims 1 to 11, wherein the initial oil is selected from among palm oil (concrete or olein), soybean oil, palm nut oil, copra oil, babassu oil, rapeseed oil, old or new, sunflower oil, conventional or oleic, corn oil, cotton oil, peanut oil, pourgher oil, castor oil, linseed oil and crambe oil, algae oil, and the sunflower or rapeseed oils obtained by genetic engineering or hybridization, oils partly modified by polymerization or oligomerization, waste kitchen oil, slaughterhouse oil, fish oil, seal oil, tallow, lard, fat from sewage treatment.

13. A method as claimed in any one of claims 1 to 12, wherein the reaction is carried out in discontinuous mode.

14. A method as claimed in any one of claims 1 to 12, wherein the reaction is carried out in continuous mode, with a fixed bed or with autoclaves and decanters arranged in series.

15. A method as claimed in claim 14, wherein the reaction is carried out in a fixed bed, at a pressure ranging between 1 and 7 MPa and at a LHSV ranging between 0.1 and 3, with an alcohol/fatty substance weight ratio ranging between 3/1 and 0.1/1.

## Patentansprüche

1. Verfahren zur Herstellung einer Alkoholesterzusammensetzung linearer Monocarbonsäuren mit 6 bis 26 Kohlenstoffatomen und Glycerin, bei dem eine Fettsubstanz pflanzlichen oder tierischen Ursprungs mit einem aliphatischen Monoalkohol, der 1 bis 18 Kohlenstoffatome umfasst, in Gegenwart mindestens eines heterogenen Katalysators umgesetzt wird, wobei mindestens eine feste Lösung vom Typ ZnₓAl₂O₍₃₊ₓ₎, worin x im Bereich zwischen 0 und 1 (ausschließlich der Grenzwerte) liegt, und ZnO, das zwischen 7 und 30 Gew.% vorhanden ist, kombiniert werden.

2. Verfahren nach Anspruch 1, bei dem der Katalysator mindestens eine feste Lösung vom Typ ZnₓAl₂O₍₃₊ₓ₎, worin x im Bereich zwischen 0 und 1 (ausschließlich der Grenzwerte) liegt, und ZnO, das zwischen 10 und 30 Gew.-% vorhanden ist, kombiniert.

3. Verfahren nach einem der Ansprüche 1 und 2, bei dem der heterogene Katalysator nach einem Verfahren hergestellt wird, das mindestens die folgenden Schritte umfasst:
a) Vormischen von Pulvern aus Zinkoxid und Aluminiumpxidvorläufer oder auch aus Zinkoxid, Zinkaluminat ZnₓAl₂O₍₃₊ₓ₎ und Aluminiumoxidvorläufer; durch Drehen der Mischerarme;
b) Mischen der Pulver in Gegenwart mindestens eines Peptisationsmittels vom Typ mineralische oder organische Säure,
c) Extrudieren der nach dem Kneten erhaltenen Paste bei einem Druck im Bereich zwischen 3 und 10 MPa;
d) Durchführen einer Wärmebehandlung, die mindestens die folgenden Schritte umfasst:
d1) einen Schritt zum Trocknen der Extrudate, die in Schritt c) erhalten wurden,
d2) Kalzinieren unter Luft,
e) gegebenenfalls Zerkleinern, um das Extrudat, das nach Abschluss der vorhergehenden Schritte erhalten wurde, in verschiedene Formen zu bringen.

4. Verfahren nach einem der Ansprüche 1 oder 2, bei dem der heterogene Katalysator nach einem Verfahren hergestellt wird, das mindestens die folgenden Schritte umfasst:
a) Peptisieren des Aluminiumoxidvorläufers in Gegenwart mindestens eines Peptisationsmittels vom Typ mineralische oder organische Säure,
b) Zugeben mindestens eines Zinkoxids oder mindestens eines Zinkoxids und eines Mischoxids ZnₓAl₂O₍₃₊ₓ₎ zum Teig, der in Schritt a) erhalten wurde und Mischen des erhaltenen Gemischs,
c) Extrudieren der nach dem Mischen erhaltenen Paste bei einem Druck im Bereich zwischen 3 und 10 MPa,
d) Durchführen einer Wärmebehandlung, die mindestens die folgenden Schritte umfasst:
d1) einen Schritt zum Trocknen der Extrudate, die in Schritt c) erhalten wurden,
d2) Kalzinieren unter Luft,
e) gegebenenfalls Zerkleinern, um das Extrudat, das nach Abschluss der vorhergehenden Schritte erhalten wurde, in verschiedene Formen zu bringen.

5. Verfahren nach einem der Ansprüche 1 bis 4, bei dem das Peptisationsmittel aus Salzsäure, Schwefelsäure, Salpetersäure, Essigsäure und Ameisensäure ausgewählt ist.

6. Verfahren nach einem der Ansprüche 1 bis 5, bei dem die Peptisationsmittelkonzentration im Bereich zwischen 2 und 15 Gew.-% liegt.

7. Verfahren nach einem der Ansprüche 1 bis 6, bei dem das Mischen über einen Zeitraum von 15 bis 60 Min. bei einer Drehgeschwindigkeit der Mischerarme im Bereich zwischen 15 und 75 Umdrehungen/Minute durchgeführt wird.

8. Verfahren nach einem der Ansprüche 1 bis 7, bei dem die Wärmebehandlung, der der Katalysator unterzogen wird, eine Trocknung zwischen 40 und 150 °C, dann eine Kalzination zwischen 300 und 1.100 °C umfasst.

9. Verfahren nach einem der Ansprüche 1 bis 8, bei dem der Katalysator die Form von Pulver, Extrudaten, Kugeln oder Pastillen aufweist.

10. Verfahren nach einem der Ansprüche 1 bis 9, bei dem der aliphatische Monoalkohol 1 bis 12 Kohlenstoffatome, bevorzugt 1 bis 5 Kohlenstoffatome umfasst.

11. Verfahren nach einem der Ansprüche 1 bis 10, bei dem bei einer Temperatur im Bereich zwischen 130 °C und 220 °C, bei einem Druck von weniger als 10 MPa und mit einem Monoalkoholüberschuss, bezogen auf die Stöchiometrie FettsubstanzlAlkohol, gearbeitet wird.

12. Verfahren nach einem der Ansprüche 1 bis 11, wobei das Ausgangsöl ausgewählt ist aus den (konkreten oder oleinhaltigen) Palmölen, Sojaölen, Palmkernölen, Kokosölen, Babassuölen, alten und neuen Rapsölen, herkömmlichen oder ölsäurehaltigen Sonnenblumenölen, Maisölen, Baumwollsamenölen, Erdnussölen, Purgiernussölen, Rizinusölen, Leinölen und Krambeölen, Algenölen und Sonnenblumenölen oder Rapsölen, die durch gentechnische Veränderung oder durch Hybridisierung erhalten wurden, den durch Polymerisation oder Oligomerisation teilweise modifizierten Ölen, Frittierölen, Kadaverölen, Fischölen, Robbenölen, Geflügelfetten, Talg, Schweineschmalz, den Fetten, die aus der Behandlung von Abwässern stammen.

13. Verfahren nach einem der Ansprüche 1 bis 12, bei dem die Umsetzung diskontinuierlich durchgeführt wird.

14. Verfahren nach einem der Ansprüche 1 bis 12, bei dem die Umsetzung kontinuierlich im Festbett oder mit in Reihe geschalteten Autoklaven und Dekantern durchgeführt wird.

15. Verfahren nach Anspruch 14, bei dem das Umsetzen im Festbett bei einem Druck im Bereich zwischen 1 und 7 MPa und einer HSV im Bereich zwischen 0,1 und 3, mit einem Gewichtsverhältnis Alkohol/Fettsubstanz im Bereich zwischen 3/1 und 0,1/1 durchgeführt wird.
